# EUROPÄISCHE PATENTSCHRIFT

(11) **EP 1 961 590 B1**
(45) Veröffentlichungstag und Bekanntmachung des Hinweises auf die Patenterteilung: **23.10.2013**
(21) Anmeldenummer: 07033574.0
(22) Anmeldetag: 01.12.2007
(51) Int. Cl.: B60C 23/04, B60R 11/00, B60R 11/02, B60S 1/50

(54) **Bauteilhalterung**
Component holder
Support de composant

(30) Priorität: 24.02.2007 DE 102007009154
(43) Veröffentlichungstag der Anmeldung: 27.08.2008
(73) Patentinhaber: Dr. Ing. h.c. F. Porsche AG, 70435 Stuttgart (DE)
(72) Erfinder: Baum, Michael, 75233 Tiefenbronn-Lehningen (DE); Deuschle, Achim, 72649 Wolfschlugen (DE)

(56) Entgegenhaltungen:
- EP-A- 0 014 749
- DE-A1- 10 351 959
- FR-A- 2 839 016
- GB-A- 1 447 396
- GB-A- 2 193 475

## Beschreibung

Die vorliegende Erfindung betrifft eine Halterung für ein Bauteil, insbesondere für eine Transpondereinheit einer Reifendruck-Kontrolleinrichtung, an einem Kraftfahrzeug.

An modernen Kraftfahrzeugen sind eine Vielzahl von Bauteilen, insbesondere von elektrischen und/oder elektronischen Bauteilen, zu haltern. Ein derartiges Bauteil ist beispielsweise eine Reifendruck-Kontrolleinrichtung, die einen im jeweiligen Fahrzeugreifen angeordneten Drucksensor sowie eine damit drahtlos kommunizierende Transpondereinheit aufweist, wobei die Transpondereinheit üblicherweise in der Nähe des jeweiligen Drucksensors am Fahrzeug anzubringen ist. Für Reparatur- und Wartungszwecke kann es vorteilhaft sein, derartige Bauteile, insbesondere auch eine solche Transpondereinheit, so am Fahrzeug festzulegen, dass diese einfach montierbar und demontierbar ist.

Aus der gattungsbildenden EP 0 014 749 A1 ist eine Halterung zur lösbaren Befestigung eines Gehäuses an einer Wand bekannt, wobei die Halterung aus einem mit der Wand fest verbundenen Halteteil besteht, das eine horizontal angeordnete Zunge und ein vertikal angeordnetes längliches Rastelement aufweist, sowie aus einem auf die Zunge passenden Schlitz und einem länglichen Rastelement an einer Wand des Gehäuses.

Die DE 103 51 959 A1 beschreibt eine Anordnung einer elektronischen Steuereinheit in einem Fahrzeug, wobei die Steuereinheit an oder in einem Flüssigkeitsbehälter für eine Scheibenwaschanlage des Fahrzeuges angeordnet ist, so dass diese Steuereinheit hierdurch gekühlt bzw. abgeschirmt wird.

Weiterhin beschreibt die GB 1 447 396 A einen mit Seitenwänden versehenen Auflagerahmen für Behälter mit Erste-Hilfe-Ausrüstung in industriellen Fahrzeugen, während in der FR 2 839 016 A die Befestigung des Gehäuses eines Reifendrucksensors für ein Kraftfahrzeug an einer Felge offenbart wird.

Die vorliegende Erfindung beschäftigt sich mit dem Problem, für eine Halterung der eingangs genannten Art eine verbesserte Ausführungsform anzugeben, die sich insbesondere durch eine vereinfachte Montage und Demontage des jeweiligen Bauteils auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, das jeweilige Bauteil, insbesondere eine Transpondereinheit einer Reifendruck-Kontrolleinrichtung, über eine Halterung an einem Kraftfahrzeug festzulegen, welche das Bauteil einerseits U-förmig umgreift und andererseits mit dem Bauteil über zumindest ein Rastelement verrastbar ist, so dass das Bauteil bei in der Halterung angebrachtem Zustand zuverlässig gehalten ist. Die U-förmige Umgreifung gewährleistet dabei einerseits vorzugsweise einen Formschluss zwischen der Halterung und dem Bauteil, während das wenigstens eine Rastelement eine Fixierung des Bauteils in der U-förmigen Halterung bewirkt. Zur Montage muss das Bauteil daher nicht mehr wie üblich und aus dem Stand der Technik bekannt mit der Halterung bzw. mit dem Kraftfahrzeug verschraubt werden, sondern es kann einfach in die U-förmige Halterung eingeschoben und mittels des wenigstens einen Rastelementes mit der Halterung verclipst werden. Zur Demontage muss lediglich die Verrastung zwischen dem wenigstens einen Rastelement und dem Bauteil gelöst werden, so dass das Bauteil einfach aus der U-förmigen Umgreifung der Halterung entnommen werden kann. Durch die erfindungsgemäße Halterung kann dabei ein Montage- bzw. Demontageaufwand erheblich reduziert werden, da ein bisher erforderliches Verschrauben des Bauteils mit der Halterung bzw. mit dem Kraftfahrzeug entfallen kann. Zugleich wird auch eine Teilevielfalt reduziert, da insbesondere Verbindungsmittel, wie beispielsweise Schrauben, nunmehr nicht mehr benötigt werden.

Erfindungsgemäß ist die Halterung derart an das Bauteil angepasst, dass sich das Bauteil einerseits über einen Kragen an der Halterung abstützt, während es sich andererseits an einer orthogonal zu den U-förmig angeordneten Seiten der Halterung angeordneten Konsole abstützt. Hierdurch wird eine besonders zuverlässige Fixierung des Bauteils in der Haltung erreicht, da die Halterung das Bauteil einerseits an drei Seiten U-förmig umgreift und andererseits die orthogonal zu den U-förmig angeordneten Seiten angeordnete Konsole aufweist, welche eine Anlagefläche für das Bauteil bildet. Über einen am Bauteil vorhandenen und als Anbindungsflansch ausgebildeten Abschnitt kann sich dabei das Bauteil an einer dem Kragen gegenüberliegenden Seite an einem U-Schenkel der Halterung abstützen, so dass das Bauteil den U-Schenkel der Halterung einerseits mit dem Kragen und andererseits mit dem als Anbindungsflansch ausgebildeten Abschnitt einklemmt, wodurch eine unter normalen Umständen unverrückbare Halterung des Bauteils erreicht werden kann. Für diese zuverlässige Halterung sind dabei keinerlei Verbindungselemente oder dergleichen erforderlich, sondern lediglich eine entsprechende geometrische Ausgestaltung der Halterung an sich.

Bei einer weiteren vorteilhaften Ausführungsform der erfindungsgemäßen Lösung ist die Halterung als Kunststoffspritzteil ausgebildet. Dies bietet die Möglichkeit, die Halterung mit geringen Stückkosten und nahezu beliebiger Form herzustellen, wodurch einerseits eine hohe konstruktive Freiheit gewährleistet werden kann und andererseits eine kostengünstige Fixierung des Bauteils am Kraftfahrzeug erreicht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine auseinandergezogene Darstellung einer Halterung mit einem Bauteil,
- Fig. 2: eine Ansicht in montiertem Zustand der Halterung,
- Fig. 3: eine Darstellung wie in Fig. 1, jedoch bei einer anderen Ausführungsform der Halterung,
- Fig. 4: eine Ansicht der in Fig. 3 dargestellten Halterung im montierten Zustand.

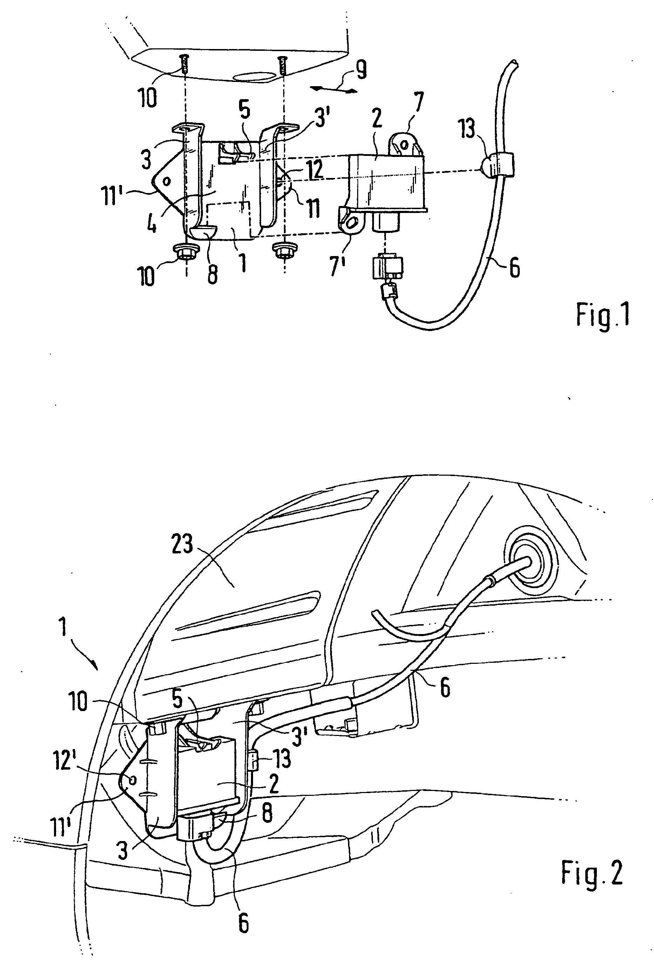

Entsprechend Fig. 1 weist eine Halterung 1 für ein Bauteil 2 eine U-förmige Aufnahmeöffnung mit zwei seitlichen U-Schenkeln 3 und 3' sowie einen, die beiden U-Schenkel 3,3' verbindenden Abschnitt 4 auf. Bei in der Halterung 1 angebrachtem Bauteil 2 (vgl. Fig. 2) umgreift die Halterung 1 das Bauteil 2 U-förmig, so dass dieses vorzugsweise formschlüssig in der Halterung 1 eingebettet ist. Darüber hinaus weist die Halterung 1 ein Rastelement 5 auf, welches im wesentlichen orthogonal zum die beiden U-Schenkel 3,3' verbindenden Abschnitt 4 absteht und welches bei in der Halterung 1 angebrachtem Bauteil 2 mit letzterem verrastet ist und dabei das Bauteil 2 in der Halterung 1 fixiert.

Das Bauteil 2 ist gemäß den Ausführungsbeispielen in den Fig. 1 bis 4 als Transpondereinheit einer Reifendruck-Kontrolleinrichtung ausgebildet und kommuniziert einerseits drahtlos mit einem im jeweiligen Reifen angeordneten und nicht gezeigten Drucksensor, während es andererseits über eine Verbindungsleitung 6 mit einem entsprechenden, ebenfalls nicht gezeigten Steuergerät verbunden ist. Am Bauteil 2 sind zwei sich gegenüberliegende Abschnitte 7 und 7' angeordnet, welche als Anbindungsflansche ausgebildet sind und welche ohne die erfindungsgemäße Halterung 1 einer Anbindung des Bauteils 2 am Kraftfahrzeug dienen. Hierzu ist in jedem der Abschnitte 7,7' eine Durchgangsöffnung zum Durchführen eines nicht gezeigten Fixiermittels vorgesehen.

Wie der Fig. 1 weiter zu entnehmen ist, weist die Halterung 1 eine Aufnahme 8 auf, welche am Verbindungsabschnitt 4 angeordnet ist und in welche bei in der Halterung 1 angebrachtem Bauteil 2 der Abschnitt 7' des Bauteils 2 quer zur Rastrichtung 9 eingreift. Die Aufnahme 8 ist dabei vorzugsweise komplementär zum Abschnitt 7' des Bauteils 2 ausgebildet, so dass gemäß einer bevorzugten Ausführungsform ein formschlüssiges Eingreifen des Abschnittes 7' in die Aufnahme 8 bewirkt werden kann.

Die Halterung 1 an sich wird beispielsweise über Verbindungsmittel 10 am Kraftfahrzeug fixiert, insbesondere festgeschraubt. Durch die erfindungsgemäße Halterung 1 gestaltet sich eine Montage bzw. eine Demontage des Bauteils 2 in der Halterung 1 denkbar einfach, da zu einer Montage lediglich der Abschnitt 7' des Bauteils 2 in die Aufnahme 8 eingeschoben werden muss und das Bauteil 2 gegen den Verbindungsabschnitt 4 der Halterung 1 gedrückt werden muss, so dass das Rastelement 5' mit dem Bauteil 2 verrastet. Zur Demontage muss lediglich das Rastelement 5 entrastet und das Bauteil 2 aus der Aufnahme 8 herausgeschwenkt werden.

Um die Verbindungsleitung 6 ebenfalls zuverlässig festlegen zu können, weist die Halterung 1 zumindest einen Befestigungsflansch 11 auf, in welchem eine Durchgangsöffnung 12 angeordnet ist. Gemäß der Darstellung in Fig. 1 und 2 weist die Halterung zwei Befestigungsflansche 11 und 11' auf. In der Durchgangsöffnung 12 kann ein Halter 13 befestigt, insbesondere verklemmt werden, und so die Verbindungsleitung 6 ebenfalls zuverlässig an der Halterung 1 gehaltert werden.

Fig. 2 zeigt dabei die Halterung 1 in montiertem Zustand, wobei das Bauteil 2, hier die Transpondereinheit, in der Halterung 1 gehaltert ist. Zu erkennen ist hierbei, dass die Aufnahme 8 dem wenigstens einen Rastelement 5 gegenüber liegt, wodurch sich eine Fixierung des Bauteils 2 in der Halterung 1 orthogonal zur Rastrichtung 9 ergibt. Generell kann dabei die Halterung 1 als kostengünstiges Kunststoffspritzteil ausgebildet sein wodurch geringe Stückkosten erzielbar sind.

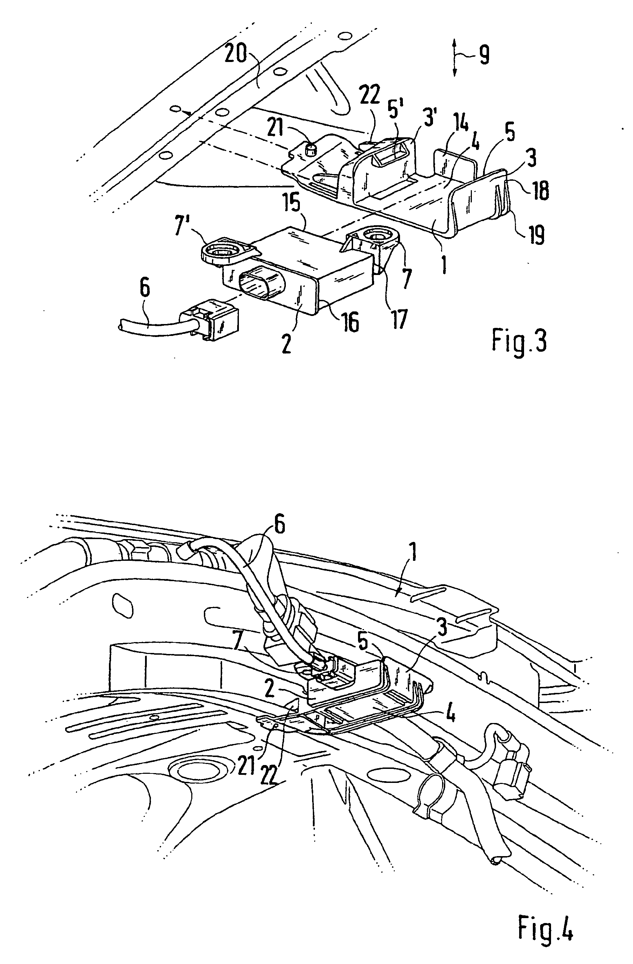

Die Halterung 1 gemäß der Fig. 3 weist ebenfalls zwei U-Schenkel 3 und 3' sowie einen die beiden U-Schenkel 3,3' verbindenden Abschnitt 4 auf, wobei die beiden U-Schenkel 3 und 3' sowie der Abschnitt 4 das Bauteil 2 in seiner in der Halterung 1 angeordneten Montagestellung fixieren. Zusätzlich zu den beiden U-Schenkeln 3 und 3' weist die Halterung 1 gemäß den Fig. 3 und 4 eine orthogonal zu den U-förmig angeordneten Seiten 3,3',4 der Halterung 1 angeordnete Konsole 14 auf, welche bei in der Halterung 1 angebrachtem Bauteil 2 an eine Seite 15 des Bauteils 2 anliegt. Die Halterung 1 gemäß den Fig. 3 und 4 ist dabei derart an das Bauteil 1 angepasst, dass sich dieses einerseits über einen Kragen 16 an der Halterung, speziell an einem Rand der U-Schenkel 3,3' sowie des Verbindungsabschnitts 4 abstützt, während es sich andererseits an der Konsole 14 abstützt. Das Bauteil 2 legt sich darüber hinaus mit einem überstehenden Randbereich 17 des Anbindungsflansches 7 an einer kurzen Randseite 18 des U-Schenkels 3 an, so dass der U-Schenkel 3 vom Kragen 16 einerseits und dem Randbereich 17 andererseits eingefasst ist.

An den beiden U-Schenkeln 3 und 3' weist die Halterung 1 gemäß der Fig. 3 und 4 zwei sich gegenüberliegend angeordnete Rastelemente 5 und 5' auf, welche in der Art von

Rastnasen ausgebildet sind und welche bei in der Halterung 1 angebrachtem Bauteil 2 mit letzterem verrastet sind. Darüber hinaus können an der Halterung 1 zusätzlich Verstärkungsrippen 19 angeordnet sein, welche insbesondere die U-Schenkel 3 und 3' unterzugartig verstärken. Nicht gezeigt ist eine am Fahrzeug montierte oder montierbare Abdeckung, welche die Halterung 1 oder zumindest einen Bereich der Halterung 1 mit dem Bauteil 2 nach außen abdeckt.

Die Halterung gemäß der Fig. 3 kann dabei an einem Längsträger 20 angeordnet werden, wobei ein an der Halterung 1 angeordneter Positionierstift 21 eine Positionierung der Halterung 1 am Längsträger 20 erleichtert. Darüber hinaus kann die Halterung 1 gemäß der Fig. 3 Befestigungslaschen 22 aufweisen, welche eine Verklemmung und zusammen mit dem Positionierstift 21 eine Fixierung der Halterung 1 am Längsträger 20 bewirken. Demgegenüber ist die Halterung 1 gemäß den Fig. 1 und 2 mit einem Radkasten 23 des Kraftfahrzeuges verbunden, insbesondere verschraubt.

Durch die erfindungsgemäße Halterung 1 kann eine besonders einfache und schnelle Montage bzw. Demontage des Bauteils 2 erreicht werden, da das Bauteil 2 nicht mehr, wie bisher üblich, mit der Halterung 1 verschraubt werden muss, sondern über entsprechende Clipsverbindungen mit diesem verbunden werden kann. Hierdurch lässt sich darüber hinaus die Teilevielfalt reduzieren, da bisher benötigte Verbindungsmittel, wie beispielsweise Schrauben, nunmehr nicht mehr benötigt werden.

## Patentansprüche

1. Halterung (1) für ein Bauteil (2) an einem Kraftfahrzeug, wobei die Halterung (1) zumindest ein Rastelement (5,5') aufweist, welches bei in der Halterung (1) angebrachtem Bauteil (2) mit diesem verrastet und das Bauteil (2) in der Halterung (1) fixiert, **dadurch gekennzeichnet, dass** die Halterung (1) das Bauteil (2) U-förmig umgreift und zwei sich gegenüberliegende und an den beiden U-Schenkeln (3,3') angeordnete Rastelemente (5,5') aufweist, dass die Halterung (1) derart an das Bauteil (2) angepasst ist, dass sich das Bauteil (2) einerseits über einen Kragen (16) an der Halterung (1) abstützt, während es sich andererseits an einer Konsole (14) abstützt, dass die Halterung (1) Befestigungslaschen (22) und einen Positionierstift (21) aufweist, welche zusammen eine Fixierung der Halterung (1) bewirken, und dass das Bauteil (2) als Transpondereinheit einer Reifendruck-Kontrolleinrichtung ausgebildet ist.

2. Halterung nach Anspruch 1, **dadurch gekennzeichnet, dass** die Halterung (1) eine orthogonal zu den U-förmig angeordneten Seiten (3,3',4) der Halterung (1) angeordnete Konsole (14) aufweist, welche sich bei in der Halterung (1) angebrachtem Bauteil (2) an eine Seite des Bauteils (2) anlegt, oder dass die Halterung (1) eine Aufnahme (8) aufweist, in welche bei in der Halterung (1) angebrachtem Bauteil (2) ein Abschnitt (7) des Bauteils (2) quer zur Rastrichtung (9) eingreift.

3. Halterung nach Anspruch 2, **dadurch gekennzeichnet, dass** die Aufnahme (8) dem wenigstens einen Rastelement (5) gegenüberliegt, und/oder dass der Abschnitt (7) ein am Bauteil (2) vorhandener Anbindungsflansch ist.

4. Halterung nach einem der Ansprüche 1 bis 3, **dadurch gekennzeichnet, dass** die Halterung (1) als Kunststoffspritzteil ausgebildet ist.

5. Halterung nach einem der Ansprüche 1 bis 4, **dadurch gekennzeichnet, dass** die Halterung (1) mit einem Längsträger (20) oder mit einem Radkasten (23) des Kraftfahrzeugs verbunden, insbesondere verschraubt ist, oder dass die Halterung (1) als integraler Bestandteil eines Wischwasserbehälters oder eines Trägers für einen Wischwasserbehälter, insbesondere eines Wischwasserbehälterfußes, ausgebildet ist.

6. Halterung nach einem der Ansprüche 1 bis 5, **dadurch gekennzeichnet, dass** eine am Fahrzeug montierte oder montierbare Abdeckung vorgesehen ist, die die Halterung (1) oder zumindest einen Haltebereich mit dem Bauteil (2) nach außen abdeckt.

7. Halterung nach einem der Ansprüche 1 bis 6, **dadurch gekennzeichnet, dass** das als Transpondereinheit einer Reifendruck-Kontrolleinrichtung ausgebildete Bauteil (2) einerseits mit einem im jeweiligen Reifen angeordneten Drucksensor drahtlos kommuniziert und andererseits über eine Verbindungsleitung (6) mit einem entsprechenden Steuergerät verbunden ist.

8. Halterung nach Anspruch 7, **dadurch gekennzeichnet, dass** die Halterung einen Befestigungsflansch (11) zur Befestigung eines Halters (13) für die Verbindungsleitung (6) aufweist.

## Claims

1. Holder (1) for a component (2) on a motor vehicle, the holder (1) having at least one latching element (5, 5') which, when a component (2) is attached in the holder (1), latches with the said component (2) and fixes the component (2) in the holder (1), **characterized in that** the holder (1) engages around the component (2) in a U-shaped manner and has two latching elements (5, 5') which lie opposite one another and are arranged on the two U-limbs (3, 3'), **in that** the holder (1) is adapted to the component (2) in such a way that the component (2) is supported on one side via a collar (16) on the holder (1), whereas it is supported on the other side on a bracket (14), **in that** the holder (1) has fastening lugs (22) and a positioning pin (21) which together bring about fixing of the holder (1), and **in that** the component (2) is configured as a transponder unit of a tyre-pressure control device.

2. Holder according to Claim 1, **characterized in that** the holder (1) has a bracket (14) which is arranged orthogonally with respect to the sides (3, 3', 4) of the holder (1) which are arranged in a U-shaped manner, and which bracket (14) bears against a side of the component (2) when the component (2) is attached in the holder (1), or **in that** the holder (1) has a receptacle (8), into which a section (7) of the component (2) engages transversely with respect to the latching direction (9) when the component (2) is attached in the holder (1).

3. Holder according to Claim 2, **characterized in that** the receptacle (8) lies opposite the at least one latching element (5), and/or **in that** the section (7) is an attaching flange which is present on the component (2).

4. Holder according to one of Claims 1 to 3, **characterized in that** the holder (1) is configured as a plastic injection-moulded part.

5. Holder according to one of Claims 1 to 4, **characterized in that** the holder (1) is connected, in particular screwed, to a longitudinal carrier (20) or to a wheel arch (23) of the motor vehicle, or **in that** the holder (1) is configured as an integral constituent part of a wiper-water container or of a support for a wiper-water container, in particular of a wiper-water container base.

6. Holder according to one of Claims 1 to 5, **characterized in that** a covering which is mounted or can be mounted on the vehicle is provided, which covering covers the holder (1) or at least one holding region with the component (2) to the outside.

7. Holder according to one of Claims 1 to 6, **characterized in that** the component (2) which is configured as a transponder unit of a tyre-pressure control device firstly communicates wirelessly to a pressure sensor which is arranged in the respective tyre and is secondly connected via a connecting line (6) to a corresponding control unit.

8. Holder according to Claim 7, **characterized in that** the holder has a fastening flange (11) for fastening a holder (13) for the connecting line (6).

## Revendications

1. Organe de fixation (1) pour un composant (2) d'un véhicule automobile, l'organe de fixation (1) présentant au moins un élément d'encliquetage (5, 5') qui, lorsque le composant (2) est monté dans l'organe de fixation (1), s'encliquète avec celui-ci et fixe le composant (2) dans l'organe de fixation (1), **caractérisé en ce que** l'organe de fixation (1) vient en prise en forme de U autour du composant (2) et présente deux éléments d'encliquetage (5, 5') opposés et disposés au niveau des deux branches (3, 3') du U, **en ce que** l'organe de fixation (1) est adapté au composant (2) de telle sorte que le composant (2) s'appuie d'une part par le biais d'un rebord (16) contre l'organe de fixation (1), tandis qu'il s'appuie d'autre part contre une console (14), **en ce que** l'organe de fixation (1) présente des pattes de fixation (22) et une goupille de positionnement (21), lesquelles provoquent conjointement une fixation de l'organe de fixation (1), et **en ce que** le composant (2) est réalisé sous forme d'unité de transpondeur d'un dispositif de contrôle de pression des pneus.

2. Organe de fixation selon la revendication 1, **caractérisé en ce que** l'organe de fixation (1) présente une console (14) disposée perpendiculairement aux côtés (3, 3', 4) de l'organe de fixation (1) disposés en forme de U, laquelle console, lorsque le composant (2) est monté dans l'organe de fixation (1), s'applique contre un côté du composant (2), ou **en ce que** l'organe de fixation (1) présente un logement (8) dans lequel, lorsque le composant (2) est monté dans l'organe de fixation (1), vient en prise une portion (7) du composant (2) transversalement à la direction d'encliquetage (9).

3. Organe de fixation selon la revendication 2, **caractérisé en ce que** le logement (8) est opposé à l'au moins un élément d'encliquetage (5) et/ou **en ce que** la portion (7) est une bride de liaison prévue sur le composant (2).

4. Organe de fixation selon l'une quelconque des revendications 1 à 3, **caractérisé en ce que** l'organe de fixation (1) est réalisé sous forme de pièce moulée par injection de plastique.

5. Organe de fixation selon l'une quelconque des revendications 1 à 4, **caractérisé en ce que** l'organe de fixation (1) est connecté à un longeron (20) ou à un carter de roue (23) du véhicule automobile, notamment par vissage, ou **en ce que** l'organe de fixation (1) est réalisé sous forme de composant intégral d'un réservoir d'eau de lavage ou d'un support pour un réservoir d'eau de lavage, en particulier d'une base de réservoir d'eau de lavage.

6. Organe de fixation selon l'une quelconque des revendications 1 à 5, **caractérisé en ce qu'**il est prévu un recouvrement monté ou pouvant être monté sur le véhicule, lequel recouvre vers l'extérieur l'organe de fixation (1) ou au moins une région de retenue comprenant le composant (2).

7. Organe de fixation selon l'une quelconque des revendications 1 à 6, **caractérisé en ce que** le composant (2) réalisé sous forme d'unité de transpondeur d'un dispositif de contrôle de la pression des pneus communique d'une part sans fil avec un capteur de pression disposé dans chaque pneu, et est connecté d'autre part par le biais d'une conduite de connexion (6) à un appareil de commande correspondant.

8. Organe de fixation selon la revendication 7, **caractérisé en ce que** l'organe de fixation présente une bride de fixation (11) pour la fixation d'un organe de retenue (13) pour la conduite de connexion (6).
